# EUROPÄISCHE PATENTSCHRIFT

(11) **EP 1 351 846 B1**
(45) Veröffentlichungstag und Bekanntmachung des Hinweises auf die Patenterteilung: **21.07.2004**
(21) Anmeldenummer: 02701185.7
(22) Anmeldetag: 11.01.2002
(51) Int. Cl.: B60T 8/36, H02K 5/14, H02K 5/22, F04B 17/03

(54) **MOTOR-PUMPEN-AGGREGAT, INSBESONDERE KRAFTFAHRZEUG-BREMSVORRICHTUNG**
MOTOR PUMP UNIT, PARTICULARLY A MOTOR VEHICLE BRAKING DEVICE
GROUPE MOTOPOMPE, NOTAMMENT DISPOSITIF DE FREINAGE D'AUTOMOBILE

(30) Priorität: 18.01.2001 DE 100204 q; 18.12.2001 DE 10162247
(43) Veröffentlichungstag der Anmeldung: 15.10.2003
(73) Patentinhaber: SIEMENS AKTIENGESELLSCHAFT, 80333 München (DE)
(72) Erfinder: HARTEL, Gerd, 97273 Kürnach (DE); STEEGMÜLLER, Horst, 97076 Würzburg (DE); TUPY, Matthias, 97218 Gerbrunn (DE)
(86) Internationale Anmeldenummer: PCT/DE2002/000078
(87) Internationale Veröffentlichungsnummer: WO 2002/057125

(56) Entgegenhaltungen:
- EP-A- 1 038 745
- EP-B- 0 645 875
- WO-A-95/08209
- WO-A-96/28327
- WO-A-98/16988
- US-A- 6 011 341
- PATENT ABSTRACTS OF JAPAN vol. 1997, no. 08, 29. August 1997 (1997-08-29) -& JP 09 098559 A (JECO CO LTD), 8. April 1997 (1997-04-08)
- PATENT ABSTRACTS OF JAPAN vol. 018, no. 076 (M-1556), 8. Februar 1994 (1994-02-08) -& JP 05 288143 A (ASMO CO LTD), 2. November 1993 (1993-11-02)

## Beschreibung

Die Erfindung bezieht sich auf ein Motor-Pumpen-Aggregat, insbesondere eine Kraftfahrzeug-Bremsvorrichtung, gemäß Patentanspruch 1.

Eine Kraftfahrzeug-Bremsvorrichtung mit dem ersten Teilmerkmal des Anspruchs 1 ist durch die EP 0 645 875 B1 bekannt; die motorgehäuseseitig elektrisch an eine Bürstenplatte angeschlossenen Versorgungs- bzw. Steuerleitungen führen durch die voreinanderliegenden Stirnflächen von Motorgehäuse und Pumpengehäuse bzw. Pumpengehäuse und Elektronikgehäuse und sind innengehäuseseitig verlegt; nach einer Ausgestaltung sind die Versorgungs- bzw. Steuerleitungen im Motorgehäuse innerhalb axialer Distanzstücke zwischen den Stirnseiten von Stator-Erregermagneten angeordnet, insbesondere eingespritzt, wobei die Distanzstücke zur Montagevereinfachung im Sinne einer selbsttätigen Steck-Kontaktierung zwischen den eingespritzten Versorgungs- bzw. Steuerleitungen und dem Anschlussteil des Elektronikgehäuses durch das Pumpengehäuse hindurch verlängert sein können.

Weiterhin ist durch die EP 1 038 745 A2 ein Pumpen-Antriebsmotor für ein Kraftfahrzeug-Antiblockier-Bremssystem bekannt. Dieser Antriebsmotor verfügt über einen Anschlussstecker, der durch die Pumpeneinheit hindurchragt und zur Stromversorgung des Antriebsmotors dient. Der Anschlussstecker ist innerhalb des Gehäuserandes des Elektromotors positioniert und Teil des Bürstenhalters. Nachteil dieser Anordnung ist die Einschränkung der konstruktiven Freiheit bei der Konstruktion der Pumpeneinheit. Durch die Positionierung des Anschlusssteckers dicht bei der Motor-Antriebswelle wird der nutzbare Bauraum innerhalb des Pumpengehäuses erheblich beschränkt.

Gemäß Aufgabe vorliegender Erfindung soll bei gewährleisteter Betriebssicherheit die Kontaktierung zwischen den steckerartigen Versorgungs- bzw. Steuerleitungen einerseits und dem Anschlussteil, z.B. einer Leiterplatte, des Elektronikgehäuses beim axialen Sandwich-Zusammenbau von Motorgehäuse mit Pumpengehäuse und Pumpengehäuse mit Elektronikgehäuse mit gleichzeitiger elektrischer Kontaktierung zwischen elektrischen Bauteilen im Motorgehäuse einerseits und im Elektronikgehäuse andererseits fertigungs- bzw. montagetechnisch vereinfacht werden.

Gleichzeitig soll durch die Anordnung der Versorgungs- und Steuerleitungen der konstruktiv nutzbare Bauraum nahe der Motor-Abtriebswelle in dem Pumpengehäuse möglichst wenig eingeschränkt werden.

Die Lösung dieser Aufgabe gelingt erfindungsgemäß durch ein Motor-Pumpen-Aggregat gemäß Patentanspruch 1; vorteilhafte Ausgestaltungen der Erfindung sind jeweils Gegenstand der Unteransprüche.

Durch die Fixierung der, vorzugsweise zungenartig senkrecht zu der Bürstentragplatte abstehenden, steckerartigen Versorgungs- bzw. Steuerleitungen in der Bürstentragplatte, sind sie mit diesem Bauteil als Vormontageeinheit fertigbar und beim Gehäusezusammenbau kontaktierbar, wobei durch die sonstige Beweglichkeit der Versorgungs- bzw. Steuerleitungen im Zusammenspiel mit der elastischen Isolierung insbesondere radiale mechanische Verspannungsbelastungen durch gegenseitige Versatztoleranzen der zusammenzubauenden und gegenseitig bzw. gegenüber den Versorgungs- bzw. Steuerleitungen abzudichtenden Gehäuse vermeidbar sind. Unerwünschte axiale Druckbelastungen auf die Bürstentragplatte, insbesondere im Bereich des radial über das Motorgehäuse überstehenden Befestigungsflansches, in dem die steckerartigen Versorgungs- bzw. Steuerleitungen fixiert sind, können durch die Abstützrippe abgefangen werden.

In weiterer Fertigungs- und Montagevereinfachung sind die Versorgungs- bzw. Steuerleitungen einstückiger Bestandteil eines in die Bürstentragplatte eingespritzten, Stanzgitters, das dem Anschluss weiterer Bauteile, z.B. von Entstörmitteln und insbesondere der die Rotorwicklung speisenden Bürsten, dient.

Die Erfindung sowie vorteilhafte Ausgestaltungen der Erfindung gemäß Merkmalen der Unteransprüche werden im folgenden anhand schematischer Ausführungsbeispiele in der Zeichnung näher erläutert; darin zeigen:
- FIG 1: in einem axialen Teilschnittbild ein komplett montiertes Motor-Pumpen-Aggregat;
- FIG 2: als Vormontage-Einheit ein Motorgehäuse mit Abtrieb zu einem Pumpengehäuse und mit steckerartigen Versorgungs- bzw. Steuerleitungsanschluss zu einem Elektronikgehäuse;

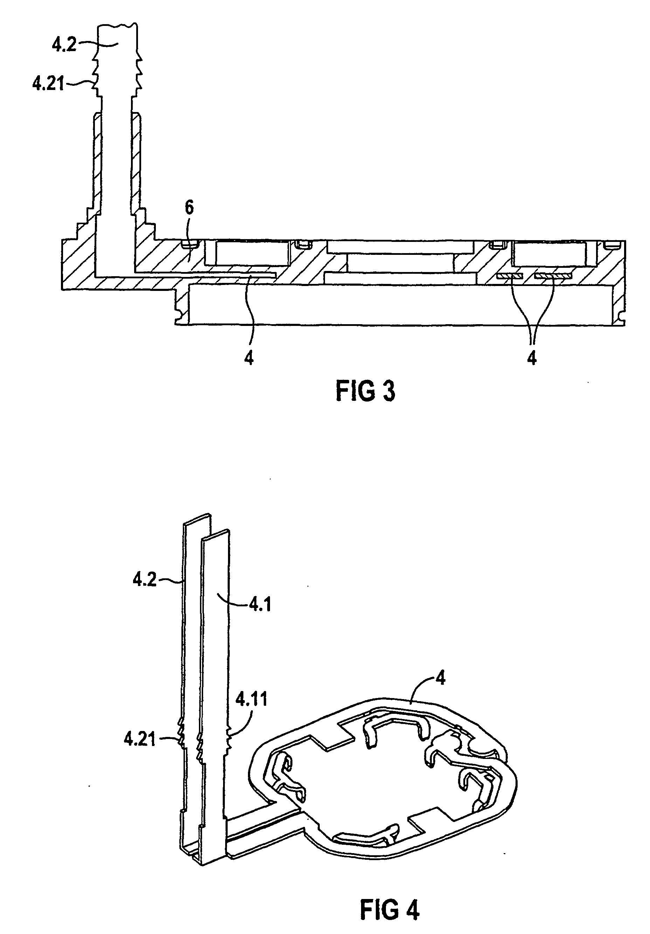

- FIG 3: einen horizontalen Schnitt durch eine Bürstentragplatte mit einem eingespritzten Stanzgitter;
- FIG 4: in perspektivischer Ansicht ein in die Bürstentragplatte einzuspritzendes Stanzgitter mit einstückigen, flachzungenartig abgebogenen steckerartigen Versorgungs- bzw. Steuerleitungen.

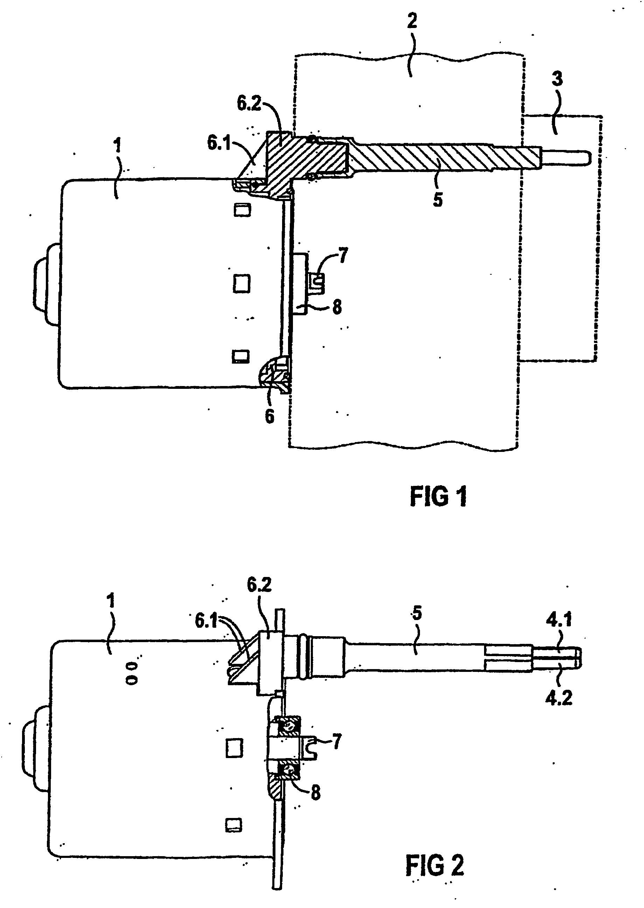

FIG 1 zeigt in einem axialen Teilschnittbild ein komplettes, z.B. für eine Kraftfahrzeug-Antiblockierbremsvorrichtung einsetzbares, Motor-Pumpen-Aggregat. An ein topfförmiges Motorgehäuse 1 eines Elektromotors ist mit seiner Stirnfläche ein Pumpengehäuse 2 einer Hochdruckpumpe für eine Brems-Hydraulikflüssigkeit abgedichtet angeflanscht; an der anderen Stirnfläche des Pumpengehäuses 2 ist ein Elektronikgehäuse 3 angebaut, das eine - hier nicht gesondert dargestellte jedoch z.B. aus der EP 0 645 875 B1 bekannte - Anschlusseinheit, insbesondere eine Versorgungs- bzw. Steuereinheit, z.B. in Form einer Leiterplatte für den Elektromotor aufnimmt.

Im Bereich der Topfrandseite ist das Motorgehäuse 1 durch eine Bürstentragplatte 6 abgeschlossen, aus der die in einem Lager 8 gelagerte Rotorwelle 7 des Elektromotors mit einem Wellenende herausragt, dass in hier nicht näher dargestellter, ebenfalls z.B. aus der EP 0 645 875 B1 bekannter Art, mit einer Pumpenwelle der Hochdruckpumpe kuppelbar ist.

Zur elektrischen Verbindung zwischen dem Elektronikgehäuse 3 und den von der Bürstentragplatte 6 aufgenommenen elektrischen Bauteilen, insbesondere Bürsten, dienen steckerartige zungenförmige Versorgungs- bzw. Steuerleitungen 4.1;4.2 die - wie aus FIG 1 ersichtlich - im wesentlichen senkrecht zur Ebene der Bürstentragplatte 6 innerhalb des Pumpengehäuses 2 verlaufen und dadurch gegen äußere Einflüsse leicht schützbar sind.

Die steckerartigen zungenförmigen Versorgungs- bzw. Steuerleitungen 4.1;4.2 sind im Sinne einer Vormontage-Baueinheit mit ihren motorgehäuseseitigen Enden in der Bürstentragplatte 6 im Bereich eines das Motorgehäuse 1 radial überragenden Befestigungsflansches 6.2 fixiert, einstückig mit einem in die Bürstentragplatte 6 eingespritzten Stanzgitter 4, das in an sich bekannter Art zum Anschluss der von der Bürstentragplatte 6 aufgenommenen Bauelemente dient, ausgebildet und aus einer zunächst in der Ebene des Stanzgitters 4 mitgestanzten Fläche abgebogen.

Zur elektrischen Isolierung der Versorgungs- bzw. Steuerleitungen 4.1;4.2 ist eine elastische, z.B. gemäß FIG 1, axial aufsteckbare und durch eine Verrastung 4.11;4.21 in ihrer Betriebsstellung fixierbare, Isolierhülse 5 derart vorgesehen, dass die motorgehäuseabgewandten Enden beim Sandwich-Zusammenbau von Motorgehäuse 1, Pumpengehäuse 2 und Elektronikgehäuse 3 trotz möglichen gegenseitigen Versatzes der zusammenzubauenden Gehäuseteile toleranzausgleichend quer zu ihrer axialen Erstreckungsrichtung ausweichen können und dadurch eine dichte Durchführung durch die Gehäusestirnflächen gewährleistbar und mechanische Spannungsbelastungen vermeidbar sind.

Zum Auffangen des beim Zusammenbau des Komplett-Aggregates und insbesondere beim Einstecken der Versorgungs- bzw. Steuerleitungen 4:1;4.2 in ihren Gegenstecker der Anschlusseinheit in dem Elektronikgehäuse 3 auf die Bürstentragplatte 6, insbesondere in ihrem Bereich des radial das Motorgehäuse 1 überragenden Befestigungsflansches, auftretenden Axialdrucks ist in vorteilhafter Weise zumindest eine Abstützrippe 6.1 vorgesehen, über welche der Befestigungsflansch 6.2 an der Außenumfangsfläche des Motorgehäuses 1 anliegt.

Zweckmäßigerweise sind der Befestigungsflansch 6.2 sowie die Abstützrippe 6.1 zusammen mit der Bürstentragplatte 6 als einstückiger Spritzgussteil ausgebildet und ist die Abstützrippe 6.1 mit einem derartigen leichten Übermaß versehen, dass sie nach dem Aggregat-Zusammenbau unter Berücksichtigung sämtlicher Toleranzen in leichtem Presssitz auf dem Außenumfang des Motorgehäuses 1 abstützt.

Der grundsätzliche Erfindungsgedanke kann wie folgt zusammengefasst werden:
Trotz axialem Sandwich-Zusammenbau von Motorgehäuse 1, Pumpengehäuse 2 und Elektronikgehäuse 3 ist bei einfacher Fertigungs- und Montagetechnik eine verspannungsfreie und bruchsichere Steckerverbindung mit Versorgungs- bzw. Steuerleitungen 4.1;4.2 von einer Bürstentragplatte 6 in dem Motorgehäuse 1 durch das Pumpengehäuse 2 hindurch zu dem Elektronikgehäuse 3 dadurch möglich, dass die Versorgungs-.bzw. Steuerleitungen 4.1;4.2 feststeckerartig mit ihren . motorgehäuseseitigen Enden als Vormontage-Bauteileinheit an einem radial über das Motorgehäuse 1 überstehenden Befestigungsflansch 6.2 fixiert sind und der Befestigungsflansch 6.2 in Gegensteckrichtung zu ihrer Steckverbindung mit dem Elektronikgehäuse 3 über zumindest eine Stützrippe 6.1 am Außenumfang des Motorgehäuses 1 abstützt.

## Patentansprüche

1. Motor-Pumpen-Aggregat, insbesondere Kraftfahrzeug-Bremsvorrichtung, enthaltend in axialer Sandwich-Hintereinanderanordnung ein Motorgehäuse (1), ein Pumpengehäuse (2) und ein Elektronikgehäuse (3) mit den Merkmalen:
- Von dem Motorgehäuse (1) führen zumindest zwei zueinander elektrisch isolierte steckerartige Versorgungs- oder Steuerleitungen (4.1;4.2) durch das Pumpengehäuse hindurch zu dem Elektronikgehäuse (3);
- die steckerartigen Versorgungs- oder Steuerleitungen (4.1;4.2) sind motorgehäuseseitig in einer Bürstentragplatte (6) fest fixiert und axial steif ausgebildet;
- die steckerartigen Versorgungs- oder Steuerleitungen sind unter axialer Abstützung gegenüber dem Motorgehäuse (1) mit einer Elektronikeinheit (3.1) in dem Elektronikgehäuse (3) steckkontaktierbar;
- die steckerartigen Versorgungs- oder Steuerleitungen (4.1;4.2) sind radial außerhalb des Motorgehäuserandes an einem den Motorgehäuserand radial überragenden Befestigungsflansch (6.2) der Bürstentragplatte fixiert; und
- die Bürstentragplatte (6) ist durch zumindest eine außenrandseitige Abstützrippe (6.1) an der Außenumfangsfläche des Motorgehäuses (1) in Gegensteckrichtung der Versorgungs- oder Steuerleitungen (4.1;4.2) abgestützt.

2. Motor-Pumpen-Aggregat nach Anspruch 1 mit dem Merkmal:
- Die zumindest eine Stützrippe (6.1) ist an dem radial überragenden Befestigungsflansch (6.2) fixiert.

3. Motor-Pumpen-Aggregat nach zumindest einem der vorangehenden Ansprüche mit dem Merkmal:
- Die zumindest eine Abstützrippe (6.1) und der Befestigungsflansch (6.2) sind einstückiger Bestandteil der Bürstentragplatte (6), insbesondere einstückiger Kunststoff-Spritzgußteil.

4. Motor-Pumpen-Aggregat nach zumindest einem der Ansprüche 1-3 mit dem Merkmal:
- die Anordnung der zumindest einen Stützrippe (6.1) ist im Sinne eines betriebsmäßigen Presssitzes zu ihrer Motorgehäuse-Abstützauflage angeordnet oder ausgebildet.

5. Motor-Pumpen-Aggregat nach zumindest einem der Ansprüche 1-4 mit dem Merkmal:
- Die steckerartigen Versorgungs- oder Steuerleitungen (4.1;4.2) sind als Flachstecker-Zungen ausgebildet und quer zu ihrer Längserstreckung toleranzausgleichend elastisch wegbiegbar.

6. Motor-Pumpen-Aggregat nach zumindest einem der Ansprüche 1-5 mit den Merkmalen:
- die steckerartigen Versorgungs- oder Steuerleitungen (4.1;4.2) sind Teile, insbesondere einstückige abgebogene Biegestanzteile, eines von der Bürstentragplatte (6), aufgenommenen Stanzgitters (4);
- die steckerartigen Versorgungs- bzw. Steuerleitungen (4.1;4.2) sind in eine elastische Isolierhülse (5), eingebettet.

7. Motor-Pumpen-Aggregat nach Anspruch 6 mit dem Merkmal:
- Die elastische Isolierhülse (5) ist als Vorfertigteil auf die steckerartigen Versorgungs- oder Steuerleitungen (4.1:4.2), insbesondere von deren freien, dem Elektronikgehäuse (3) zugewandten Enden her, aufsteckbar.

8. Motor-Pumpen-Aggregat nach Anspruch 7 mit dem Merkmal:
- Für die zumindest zwei, vorzugsweise parallel zueinander verlaufende, steckerartige Versorgungs- oder Steuerleitungen (4.1;4.2) ist eine gemeinsame elastische Isolierhülse (5) vorgesehen.

9. Motor-Pumpen-Aggregat nach zumindest einem der Ansprüche 1-8 mit dem Merkmal:
- Die steckerartigen Versorgungs- oder Steuerleitungen (4.1;4.2) sind beim Zusammenbau vom mit der Bürstentragplatte (6) vorbestückten Motorgehäuse (1) mit dem Pumpengehäuse (2) und mit dem Elektronikgehäuse (3) mit dessen korrespondierendem Anschlussteil zwangskontaktierbar.

## Claims

1. Motor pump unit, particularly a motor vehicle braking device, containing in an axial one-behind-the-other sandwich arrangement a motor housing (1), a pump housing (2) and an electronics housing (3) with the features:
- at least two plug-type supply or control lines (4.1;4.2) insulated electrically from each other lead from the motor housing (1) through the pump housing to the electronics housing (3);
- the plug-type supply or control lines (4.1;4.2) are fixed securely on the motor housing in a brush plate (6), configured in an axially rigid manner;
- the plug-type supply or control lines can be plugged in to make contact with an electronics unit (3.1) in the electronics housing (3) while supported axially in respect of the motor housing (1);
- the plug-type supply or control lines (4.1;4.2) are fixed radially outside the edge of the motor housing on a fastening flange (6.2) of the brush plate which projects radially above the edge of the motor housing; and
- the brush plate (6) can be supported by at least one external supporting rib (6.1) on the outer periphery of the motor housing (1) counter to the plug connection of the supply or control lines (4.1;4.2).

2. Motor pump unit according to Claim 1 with the feature:
- the at least one supporting rib (6.1) is fixed to the radially projecting fastening flange (6.2).

3. Motor pump unit according to at least one of the preceding claims with the feature:
- the at least one supporting rib (6.1) and the fastening flange (6.2) form a single component of the brush plate (6), particularly a single injection-molded plastic component.

4. Motor pump unit according to at least one of Claims 1 to 3 with the feature:
- the arrangement of the at least one supporting rib (6.1) is arranged or configured so that it is subject to an operating pressure when supported on the motor housing.

5. Motor pump unit according to at least one of Claims 1 to 4 with the features:
- the plug-type supply or control lines (4.1;4.2) are configured as flat plug-in tongues and can be moved flexibly across their longitudinal extension for the purposes of tolerance compensation.

6. Motor pump unit according to at least one of Claims 1 to 5 with the feature:
- the plug-type supply or control lines (4.1;4.2) are components, particularly single, bent components produced by bending and punching, of a punched lattice (4) accommodated by the brush plate (6);
- the plug-type supply or control lines (4.1;4.2) are embedded in an elastic insulating sleeve (5).

7. Motor pump unit according to Claim 6 with the feature:
- the elastic insulating sleeve (5) can be attached to the plug-type supply or control lines (4.1;4.2) as a pre-assembled component, particularly from the latter's free ends facing the electronics housing (3).

8. Motor pump unit according to Claim 7 with the feature:
- a common elastic insulating sleeve (5) is provided for at least two, preferably parallel, plug-type supply or control lines (4.1;4.2).

9. Motor pump unit according to at least one of Claims 1 to 8 with the feature:
- during assembly of the motor housing (1) (pre-fitted with the brush plate (6)) with the pump housing (2) and with the electronics housing (3) the plug-type supply or control lines (4.1;4.2) can be forced to make contact with the corresponding connector component on said housing.

## Revendications

1. Groupe motopompe, en particulier, dispositif de freinage de véhicule automobile, comprenant, disposés en sandwich axialement les uns derrière les autres, un boîtier du moteur (1), un boîtier de pompe (2) et un boîtier électronique (3), comportant les caractéristiques suivantes:
- du boîtier du moteur (1), partent au moins deux conducteurs d'alimentation ou de commande (4.1; 4.2), isolés électriquement l'un par rapport à l'autre et du type à fiches mâles, qui traversent le boîtier de pompe vers le boîtier électronique (3);
- les conducteurs d'alimentation ou de commande (4.1; 4.2) du type à fiches mâles sont fixés solidement, côté du boîtier du moteur, dans une plaque support (6) à brosses et sont réalisés rigides axialement;
- les conducteurs d'alimentation ou de commande (4.1; 4.2), du type à fiches mâles, peuvent être contactés par enfichage, en s'appuyant axialement par rapport au boîtier du moteur (1), à une unité électronique (3.1) dans le boîtier électronique (3);
- les conducteurs d'alimentation ou de commande (4.1; 4.2), du type à fiches mâles, sont fixés radialement en dehors du bord du boîtier du moteur, sur une bride de fixation (6.2) dépassant radialement du bord du boîtier du moteur; et
- la plaque support (6) à brosses est appuyée, par l'intermédiaire d'au moins une nervure d'appui (6.1), sur la surface périphérique extérieure du boîtier du moteur (1), dans la direction d'enfichage opposée aux conducteurs d'alimentation ou de commande (4.1; 4.2).

2. Groupe motopompe suivant la revendication 1, comportant la caractéristique:
- au moins l'une des nervures d'appui (6.1) est fixée à la bride de fixation (6.2) dépassant radialement.

3. Groupe motopompe suivant au moins l'une des revendications précédentes, comportant la caractéristique:
- au moins l'une des nervures d'appui (6.1) et des brides de fixation (6.2) forment un constituant en une seule pièce de la plaque support (6) à brosses, en particulier une pièce en matière plastique, moulée par injection, en formant une seule pièce.

4. Groupe motopompe suivant au moins l'une des revendications 1 à 3, comportant la caractéristique:
- la disposition comportant au moins l'une des nervures d'appui (6.1) est adaptée ou réalisée en vue de former un siège de pressage fonctionnel pour l'assise d'appui du boîtier du moteur.

5. Groupe motopompe suivant au moins l'une des revendications 1 à 4, comportant la caractéristique:
- les conducteurs d'alimentation ou de commande (4.1; 4.2) du type à fiches mâles sont réalisés sous la forme de languettes à fiches plates et peuvent être repliées élastiquement en compensant les tolérances, perpendiculairement à leur extension longitudinale.

6. Groupe motopompe suivant au moins l'une des revendications 1 à 5, comportant les caractéristiques:
- les conducteurs d'alimentation ou de commande (4.1; 4.2) du type à fiches mâles sont des pièces, en particulier des pièces estampées obtenues par pliage et découpage combinés, d'un grillage estampé (4), enrobé dans la plaque support (6) à brosses;
- les conducteurs d'alimentation ou de commande (4.1; 4.2) du type à fiches mâles sont enveloppés dans une gaine d'isolation (5) élastique.

7. Groupe motopompe suivant la revendication 6, comportant la caractéristique:
- la gaine d'isolation (5) élastique peut être enfichée, sous la forme d'une pièce préfabriquée, sur les conducteurs d'alimentation ou de commande (4.1; 4.2), du type à fiches mâles, en particulier, par leurs extrémités libres, tournées vers le boîtier électronique (3).

8. Groupe motopompe suivant la revendication 7, comportant la caractéristique:
- pour les conducteurs d'alimentation ou de commande (4.1; 4.2) du type à fiches mâles, au moins au nombre de deux, de préférence dirigés parallèlement les uns aux autres, il est prévu une gaine d'isolation (5) élastique commune.

9. Groupe motopompe suivant au moins l'une des revendications 1 à 8, comportant la caractéristique:
- les conducteurs d'alimentation ou de commande (4.1; 4.2) peuvent, lors de l'assemblage du boîtier du moteur (1) préalablement équipé de la plaque support (6) à brosses avec le boîtier de pompe (2) et avec le boîtier électronique (3), être mis en contact automatiquement avec la pièce correspondante de raccordement de celui-ci.
